Europäisches Patentamt

European Patent Office

Office européen des brevets

(19)

(11) EP 1 710 713 A1

(12) EUROPEAN PATENT APPLICATION

(43) Date of publication:
11.10.2006 Bulletin 2006/41

(51) Int Cl.:
*G06F 17/21* (2006.01)  *G01C 21/36* (2006.01)

(21) Application number: 06112318.8

(22) Date of filing: 06.04.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 07.04.2005 JP 2005111272

(71) Applicant: AISIN AW CO., LTD.
Anjo-shi, Aichi 444-1192 (JP)

(72) Inventors:
• Yamaguchi, Koji
  Okazaki
  Aichi 444-8564 (JP)
• Hiyokawa, Toyoji
  Okazaki
  Aichi 444-8564 (JP)

(74) Representative: TBK-Patent
Bavariaring 4-6
80336 München (DE)

(54) **System and method for rotating font data and map display system for displaying rotated font data**

(57)     Systems, methods, and programs for rotating font data may store font data and a plurality of conversion tables, each conversion table corresponding to a preset rotational angle. The systems, methods, and programs may select one of the conversion tables in accordance with a required angle and may rotating the font data based on the selected conversion table. The systems, methods, and programs may further store map data. The systems, methods, and programs may generate name designations of display objects included in the map data in accordance with an arrangement of the display objects on a map and may determine the required angle in accordance with the arrangement of the display objects on the map. The systems, methods, and programs may rotate characters of the generated name designations according to the required angle to create rotated name designations and may display the map data including the rotated name designations.

FIG. 5A   FIG. 5B   FIG. 5C

**Description**

The disclosure of Japanese Patent Application No. 2005-111272 filed on April 7, 2005 including the specification, drawings and abstract is incorporated herein by reference in its entirety.

Related technical fields include systems, methods, and programs for rotating font data. Related technical fields include map display systems, methods, and programs for displaying names of display objects included in map data using font data that has been rotated.

In conventional map display devices, names are displayed along linear display objects on a map such as roads and rivers. Such map display devices may be included in a navigation apparatus or an electronic map. Such a system is disclosed in, for example, Japanese Patent Application Publication No. JP A 62-501650 (see pages 9 to 10, FIG. 4). According to the disclosed configuration, road labels representing road names are arranged upward in proximity to and parallel to roads, respectively. Specifically, the road labels are each arranged slightly above and parallel to a displayed segment constituting a road in a direction from a departure point node of the segment to a destination node of the segment. The respective character fonts constituting each of the road labels are arranged upright with respect to the segment.

In order to arrange road name designations parallel to roads displayed at various angles on a map as described above, character fonts constituting each of the name designations need to be rotated such that the character fonts become upright with respect to a corresponding one of the roads. In order to rotate the character fonts to an arbitrary angle, complicated calculations using trigonometric functions are required.

In other display devices, if a set of data of character fonts in their post-rotation states is prepared in advance as to all required rotational angles, there is no need to subject the character fonts to a rotational processing every time a map is displayed. Thus, the speed of map display can be increased.

According to the above described display devices, a complicated calculation processing needs to be performed every time the contents of map display are updated. If the map needs to be constantly updated at various rotational angles, as is the case with navigation apparatuses or electronic maps, the processing load of a calculation unit is substantially increased. A large processing adversely affects the high-speed performance of map display. Alternatively, if the rotated character fonts are pre-prepared, a high-capacity storage device is required in order to store the data on those pre-prepared character fonts.

It is thus beneficial to provide a font data rotational processing unit, a program, and a map display system which make it possible to reduce a load of a calculation processing for subjecting font data to a rotational processing without requiring a high-capacity storage device in order to store the font data.

Exemplary implementations of the broad principles described herein provide systems, methods, and programs for rotating font data that may store font data and a plurality of conversion tables, each conversion table corresponding to a preset rotational angle. The systems, methods, and programs may select one of the conversion tables in accordance with a required angle and may rotating the font data based on the selected conversion table.

Exemplary implementations of the broad principles described herein may provide systems, methods, and programs that may further store map data. The systems, methods, and programs may generate name designations of display objects included in the map data in accordance with an arrangement of the display objects on a map and may determine the required angle in accordance with the arrangement of the display objects on the map. The systems, methods, and programs may rotate characters of the generated name designations according to the required angle to create rotated name designations and may display the map data including the rotated name designations.

Exemplary implementations will now be described with reference to the accompanying drawings, wherein:

FIG. 1 is a block diagram showing an exemplary configuration of a navigation apparatus;

FIG. 2 shows an exemplary display;

FIG. 3 shows an exemplary arrangement of font data;

FIG. 4 shows exemplary angles and approximate angular ranges assumable by the font data;

FIGS. 5A-5C are views demonstrating an exemplary method of character conversion by means of a conversion table;

FIG. 6A-6C show an exemplary conversion table;

FIG. 7A-7C show an exemplary conversion table; and

FIG. 8A-8C show an exemplary conversion table.

DETAILED DESCRIPTION OF EXEMPLARY IMPLEMENTATIONS

According to the following exemplary implementations, an exemplary font data rotational processing unit 1 and an exemplary map display system 2 will be described in the context of a navigation apparatus 3 mounted in a vehicle. However, it should be appreciated that the exemplary font data rotational processing unit 1 and/or the exemplary map display system 2 may be included in other display systems in which font and/or character rotation is required.

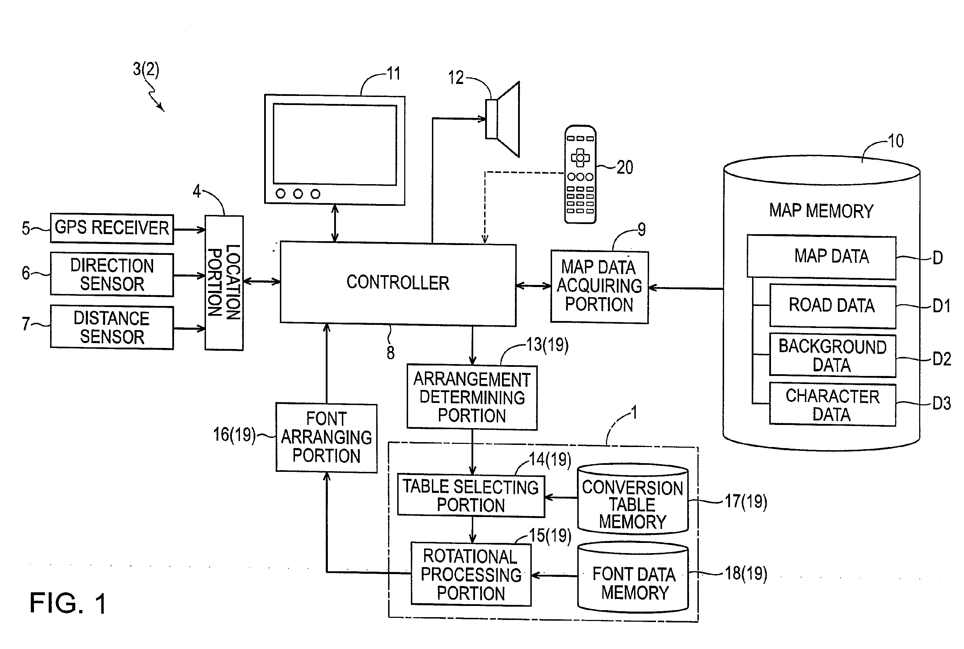

FIG. 1 shows a configuration of the exemplary navigation apparatus 3. Respective portions of the navigation apparatus 3 may be described with respect to their function. Such functional portions may be configured, for example, to subject input data to various processing, may be mounted as pieces of hardware, may be programmed as pieces of software (programs), and/or may be embodied as part of a calculation processing unit such as a CPU or the like serving as a controller.

As shown in FIG. 1, a location portion 4 may be connected to, for example, a GPS receiver 5, an azimuth sensor 6, and/or a distance sensor 7. The GPS receiver 5 may receive a signal from a GPS satellite (not shown) and may acquire, for example, a position (latitude and longitude) of the GPS receiver 5 and/or a date and time on the basis of the received signal. The direction sensor 6 may be, for example, constructed as a magnetic field sensor, a gyro sensor, an optical rotation sensor mounted on a rotational portion of a steering wheel, a rotational-type resistor volume, and/or an angle sensor mounted on a wheel portion, and may detect a driving direction of a the vehicle. The distance sensor 7 may be constructed, for example, as a combination of a vehicle speed sensor for detecting a rotational speed of a wheel, a yaw/G sensor for detecting an acceleration of the vehicle, and/or a circuit for integrating the detected acceleration twice, and may detect a moving distance of the vehicle.

The location portion 4 may, for example, perform calculation for specifying a position and an direction of the vehicle, on the basis of, for example, outputs from the .GPS receiver 5, the azimuth sensor 6, and/or the distance sensor 7. Specifically, the position and the direction of the vehicle may be respectively specified as, for example, a position expressed by a latitude and a longitude and an direction expressed by an angle from 0°, which may indicate true or magnetic north, to 360°, which also indicates true or magnetic north. The position and the direction of the vehicle specified by the location portion 4 may be output to a controller 8.

A map data acquiring portion 9 may, for example, acquire the information on the position and/or direction of the vehicle, which have been output from the location portion 4 via the navigation calculation processing portion 8, and may acquire map data from a map memory 10 on the basis of the position and/or direction. Specifically, the map data acquiring portion 9 may acquire map data of a range, for example, more extensive than at least a display area to be displayed on a display unit 11 and in the vicinity of the latitude and longitude of the position of the vehicle. The map data acquired by the map data acquiring portion 9 may be output to the controller 8.

Map data D may be stored in the map memory 10. As shown in FIG. 1, the map data D may include, for example, road data D1, background data D2, and character data D3.

The road data D1, which may be required, for example, for map matching, and/or route searching, may indicate a connection state among roads. Specifically, the road data D 1 may include, for example, information on a large number of nodes having information on positions on a map expressed by latitudes and longitudes, information on a large number of links each constituting a road through the coupling of two nodes, information on a large number of road shape complementing points having information on positions on the map expressed by the latitudes and the longitudes, and information on road widths at the respective road shape complementing points. The respective links may have, as the information on the links, information on road types (expressways, toll roads, national roads, prefectural roads, and the like) and/or lengths of the links.

As used herein, the term "link" refers to, for example, a road or portion of a road. For example, according to one type of road data, each road may consist of a plurality of componential units called links. Each link may be separated and defmed by, for example, an intersection, an intersection having more than three roads, a curve, and/or a point at which the road type changes. As used herein the term "node" refers to a point connecting two links. A node may be, for example, an intersection, an intersection having more than three roads, a curve, and/or a point at which the road type changes.

The background data D2 may be data required, for example, for displaying a map by means of the display unit 11. Specifically, the background data D2 may be composed of information on geometric shapes such as, for example, planes and/or lines that may be required for displaying display objects such as roads, buildings, rivers, and the like on a map. The background data D2 may include, for example, information on positions of the respective display objects expressed by latitudes and longitudes and/or information on the types of display objects.

The character data D3 may be data, for example, required for displaying names of the respective display objects on the map, and may be associated with the road data D1 and/or the background data D2. Specifically, the character data D3 may include, for example, font row information on font rows constituting the respective displayed names, arrangement information on positional relationships between the respective displayed names and the display objects, and/or font size information on the sizes of the fonts constituting the respective displayed names.

The map memory 10 may include, for example, a unit having a recording medium capable of storing information and a portion for driving the recording medium, for example, a hard disk drive, a DVD drive equipped with a DVD-ROM, a CD drive equipped with a CD-ROM, or the like.

As described above, the controller 8 may acquire information on the position and direction of the vehicle from the location portion 4, and may acquires the map data D from the map data acquiring portion 9 on the position the direction of the vehicle. In addition, the controller 8 may perform map matching on the basis of, for example, the road data D1, and may modify the position and the direction of the vehicle which have been output from the location portion 4. The controller 8 may then, for example, display the position of the vehicle and/or provide route guidance, using the modified information on the position and azimuth of the vehicle and the road data D1 acquired from the map data acquiring portion 9.

The controller 8 may be connected to the display unit 11 such as, for example, a liquid crystal monitor or the like, an audio output unit 12 such as, for example, a speaker and an amplifier or the like, and an input unit 20 such as, for example, a remote controller or the like.

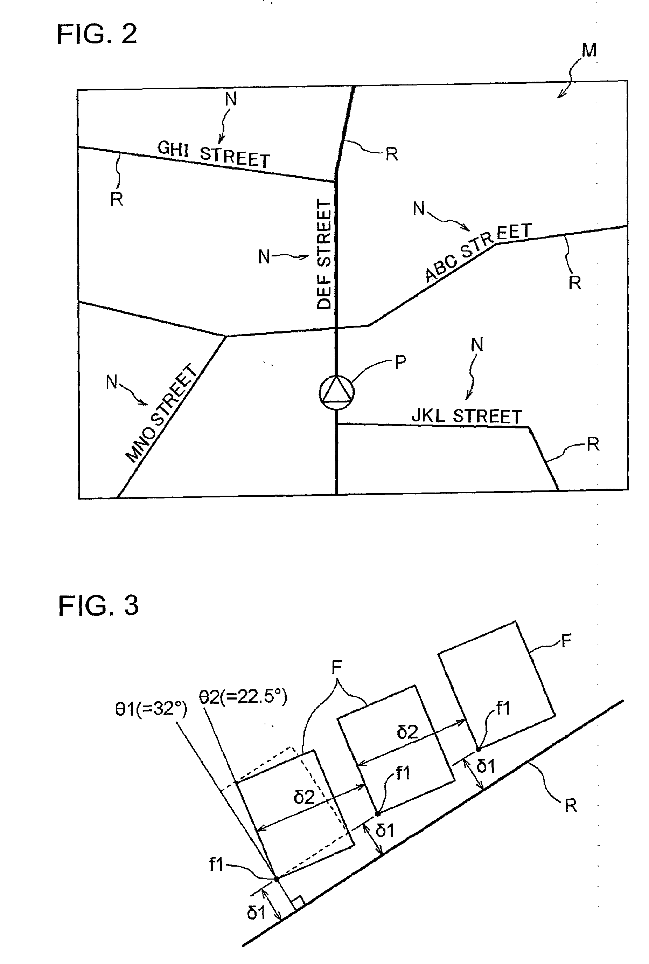

As shown in, FIG. 2, the controller 8 may generate, for example, a displayed map M in conformity with a display area of the display unit 11, from the data in the map data D in the vicinity of the position of the vehicle, which has been acquired from the map memory 10. The controller 8 may display the position of the vehicle, that is, cause the display unit 11 to display a display P of the vehicle on the display map M in a superimposed manner. Furthermore, the controller may 8 search for and set a guidance route connecting the position of the vehicle to a destination on the basis of inputs from the input unit 20. The controller 8 may display the guidance route (not shown) on the display map M and/or may provide route guidance such as providing guidance by means of the audio output unit 12.

As shown in FIG. 2, in causing the display unit 11 to display the display map M, the controller 8 may generate, for example, name designations N of respective roads R, for example, on the basis of the character data D3 included in the map data D. The controller 8 may then superimpose the name designations N on the display map M. In this case, for example, as will be described later, inclination angles of the respective font data constituting the name designations N of the roads R may be determined in accordance with the directions of the roads R on the display map M in a region where the font data are arranged. These font data may be arranged, for example, substantially parallel to and adjacent to the respective roads R, for example, by means of an arrangement determining portion 13, a table selecting portion 14, a rotational processing portion 15, and/or a font data arrangement processing portion 16.

The arrangement determining portion 13 may, for example, determine an arrangement of the respective font data constituting the name designations N of the roads R included in the display map M and a required angle θ1 in accordance with an arrangement and the directions (display angles) of the roads R on the display map M. Specifically, as shown in FIG. 3, the arrangement determining portion 13 may determine an arrangement of the respective font data F constituting the name designations N and the required angle θ1 such that the name designations N becomes substantially parallel to and adjacent to the roads R respectively, on the basis of the character data D3 included in the map data D and an arrangement of the roads R on the display map M.

In this case, the respective font data F may be arranged such that reference points fl thereof are located above the roads R (either on the left or on the right as to those of the roads R which extend vertically) while the font data F are parallel to the roads R and spaced apart therefrom by a predetermined distance δ1, and that the reference points f1 are spaced apart from one another by a predetermined distance δ2. The predetermined distance δ1 and the predetermined distance δ2 may be values that are stored in the map memory 10 as information on the arrangement of the character data D3 included in the map data D. The required angle θ1 for the respective font data F may be expressed as an angle in directions perpendicular to the directions (display angles) of the roads R at positions where the respective font data F are arranged.

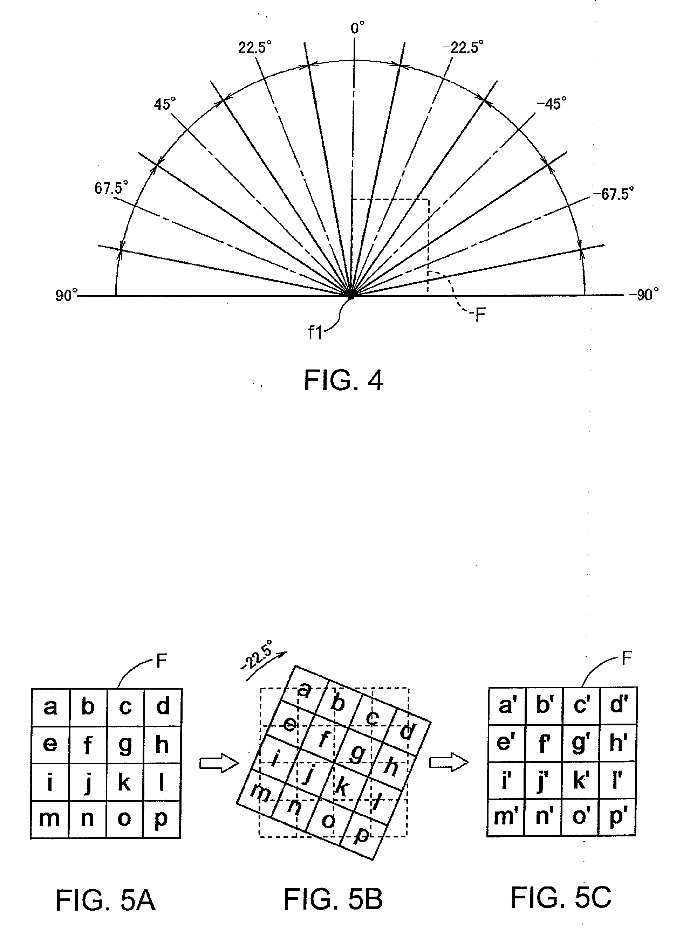

As shown in FIG. 4, the angle of the font data F may be expressed as 0° when the characters are upright, as a negative value when the characters are inclined clockwise, and as a positive value when the characters are inclined counterclockwise. In the example shown in FIG. 3, accordingly, the required angle θ1 for the respective font data F is 32°.

The table selecting portion 14 may, for example, select one of a plurality of conversion tables stored in a conversion table memory 17 in accordance with the required angle θ1 determined in the arrangement determining portion 13. Conversion tables for font rotation, which correspond to a plurality of preset rotational angles, may be stored in the conversion table memory 17. For example, upright font data may be stored in a font data storing portion 18. By rotating the upright font data in the rotational processing portion by means of the conversion tables, font data having a plurality of rotational angles may be generated. For example, eight conversion tables for rotational angles which are spaced apart from one another by 22.5° within a range of 90° in a clockwise direction and 90° in a counterclockwise direction respectively (that is, within a range of 90° to -90° on the assumption that 0° represents an upright state), as shown in FIG. 4. Specifically, the conversion tables for rotational angles of ±22.5°, ±45°, ±67.5°, and ±90° may be stored in the conversion table memory 17. By using these conversion tables, for example, the font data are allowed to assume angles of 0° (upright state), ±22.5°, ±45°, ±67.5°, and ±90°.

Then, in accordance with the required angle θ1 determined in the arrangement determining portion 13; the table selecting portion 14 may select one of the aforementioned eight conversion tables which corresponds to a rotational angle closest to the required angle θ1. In this case, as shown in FIG. 4, the table selecting portion 14 may set approximate angular ranges within an angular range of 22.5°, each about nine angles assumable by the font data. When the required angle θ1 is within one of the approximate angular ranges, the table selecting portion 14 may set a central angle of that approximate angular range as a display angle θ2 of the font data, and may select a corresponding one of the conversion tables.

Specifically, when the required angle θ1 is, for example, 32° as in the case of the example shown in FIG. 3, it is included in the angle range of 11.25° to 33.75° with a central angle of 22.5°. Therefore, for example, the table selecting portion 14 may set 22.5° as the display angle θ2 of the font data F. The table selecting portion 14 may then select the one of the conversion tables that corresponds to 22.5° from the conversion table memory 17. When the required angle θ1, for example, is included in the angular range of -11.25° to 11.25°, the display angle θ2 of the font data is 0° (upright state). Therefore, there is no need to perform the rotational processing of the font data, and the table selecting portion 14 need not select a conversion table.

For example, bitmap data of a predetermined size may be used as the font data. Thus, each conversion table may be designed to prescribe a value of each post-conversion pixel resulting from the rotational processing of the bitmap data as to the rotational angle for which the table represents and a value of each pre-conversion pixel. Specifically, the conversion tables may each be designed to prescribe the value of each post-conversion pixel as a product of the value of each pre-conversion pixel and an inclusion ratio of sub-pixels, into which each pre-conversion pixel is divided, in each post-conversion pixel.

FIGS. 5A - 6 explain the contents of the exemplary conversion tables. These views show an example of a conversion table with a rotational angle of -22.5°. For the sake of simplicity, a description will be given with reference to an example in which the font data F are bitmap data of 4x4 pixels. The number of pixels of actual font data may be larger than $4 \times 4$.

In this example, as shown in FIG. 5A, the pre-conversion font data F may be composed of 16 pixels a to p. As shown in FIGS. 5B and 5C, the post-conversion font data F resulting from the rotational processing by the angle of -22.5° may be composed of 16 pixels a' to p'. The respective pixels a to p and a' to p' have pixel values representing concentrations of a plurality of stages (e.g., 16 stages, 256 stages, or the like). The conversion table then prescribes the value of each of the pixels a' to p' by considering the value of each of the pre-conversion pixels a to p and their location relative to the pixels a' to p' when rotated.

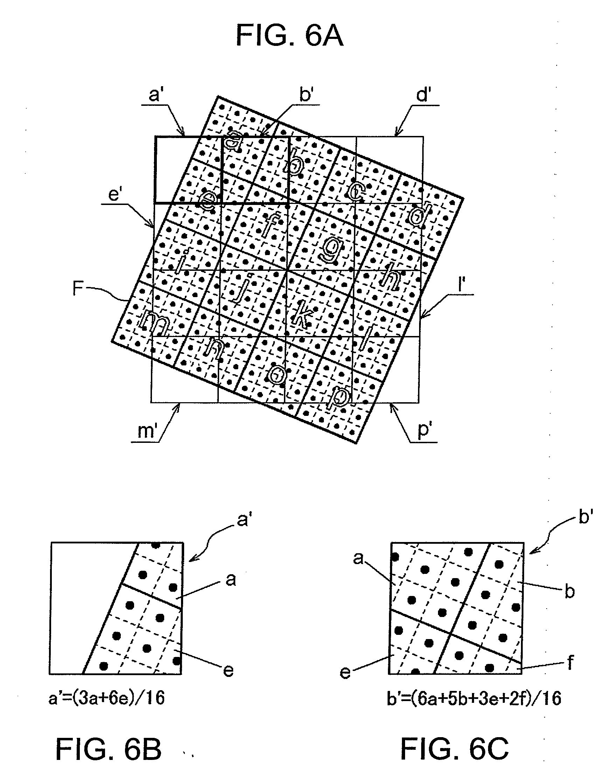

In order to reduce or prevent deterioration in the image quality of the font data F that have undergone the rotational processing, as shown in Fig. 6A, sub-pixels may be obtained by dividing each of the pre-conversion pixels a to p into 16 pixels. The value of each of the post-conversion pixels a' to p' may then prescribed as the product of the amount of the sub-pixels in each of the post-conversion pixels a' to p' and the value of each of the pre-conversion pixels a to p.

Specifically, in the case of the post-conversion pixel a' as shown in, for example, FIG. 6B, three sub-pixels of the pre-conversion pixel a and six sub-pixels of the pre-conversion pixel e are included in the range of the post-conversion pixel a' when the pre-conversion font data F are subjected to the rotational processing by the angle of -22.5°. Accordingly, the value of the post-conversion pixel a' may be expressed as follows:

$$a' = (3a+6e)/16 \qquad\qquad (1)$$

A point in each of the sub-pixels in FIGS. 6A-6C represents a central point of the sub-pixel. Thus, the number of sub-pixels of a pre-conversion pixel included in a range of a post-conversion pixel (inclusion ration) may be determined on the basis of the number of central points included therein.

In the case of the post-conversion pixel b' as shown in, for example, FIG. 6C, six sub-pixels of the pre-conversion pixel a, five sub-pixels of the pre-conversion pixels b, three sub-pixels of the pre-conversion pixel e, and two sub-pixels of the pre-conversion pixel f are included in the range of the post-conversion pixel b' when the pre-conversion font data F are subjected to the rotational processing by the angle of -22.5°. Accordingly, the value of the post-conversion pixel b' may be expressed as follows:

$$b' = (6a+5b+3e+2f)/16 \qquad\qquad (2)$$

In Equations 1 and 2, numerical values representing the stages of the respective pixels may be substituted for the symbols of the respective pixels (a', b', a, b, e, f).

Based on the foregoing, a conversion table may be provided in advance with conversion equations determined in a similar manner as Equations 1 and 2 for each of the post-conversion pixels a' to p'.

The rotational processing portion 15 may thus rotate the name designations N in accordance with the conversion table selected by the table selecting portion 14. Thus, the rotational processing portion 15 may be connected to the font data storing portion 18 for storing font data. For example, a set of upright font data may be stored in the font data storing portion 18. Specifically, a set of upright font data for a language expressing the name designations N may be stored in the font data storing portion 18. Therefore, a set of upright font data (e.g., A to Z and 0 to 9) may be stored in the font data storing portion 18 when the name designations N are expressed in English as indicated by the example of FIG. 2. Sets of font data for other languages including Japanese may alternatively or also be stored in the font data storing portion 18. According to need, font data other than those of characters, such as those of symbols, figures, numerals, and the like may also be stored in the font data storing portion 18. In this case, as described above, the font data may be composed of bitmap data of a predetermined size.

The rotational processing portion 15 may then acquire the font data constituting the name designations N from the font data storing portion 18 on the basis of the character data D3 included in the map data D, and may subjects the acquired font data to the rotational processing in accordance with the conversion table selected by the table selecting portion 14. Thus, the rotation of the font data may be carried out by substituting the values of the respective pre-conversion pixels a to p into the conversional equations, which are each designed to prescribe the value of each of the post-conversion pixels a' to p'. Thereby, the values of the respective post-conversion pixels a' to p' may be calculated. In this manner, the calculation load for the rotational processing can be reduced by subjecting the font data to the rotational processing through simple calculation using the conversion tables.

As shown in FIG. 2, the font data arrangement processing portion 16 may arrange the font data constituting the name designations N subjected to the rotational processing by the rotational processing portion 15 to generate the name designations N of the respective roads R. Specifically, as shown in FIG. 3, the font data arrangement processing portion 16 may arrange the respective font data constituting the name designations N, which have been subjected to the rotational processing, in an order indicated by the font row information in the character data D3 included in the map data D such that the name designations N become substantially parallel to and adjacent to the roads R respectively.

In this case, the arrangement of the distance $\delta 1$ a clearance $\delta 2$, and the like of the respective font data F with respect to the roads F may be similar to the arrangement determined in the arrangement determining portion 13. Since this arrangement has already been described, detailed description thereof will be omitted. The name designations N of the respective roads R generated by the font data arrangement processing portion 16 may be output to the controller 8. Then, the controller 8 may superimpose the name designations N on the display map M as shown in FIG. 2 and displayed by the display unit 11.

It should be appreciated that one or more of the elements of the above described system may be combined and or further divided in a physical, functional, and/or conceptual manner. For example, the arrangement determining portion 13, the table selecting portion 14, the rotational processing portion 15, the font data arrangement processing portion 16, the conversion table memory 17, and the font data storing portion 18 may all be physically, functionally, and/or conceptually included in a name designation generating portion 19. Similarly, the table selecting portion 14, the conversion table memory 17, the rotational processing portion 15, and the font data storing portion 18 all be physically, functionally, and/or conceptually included in a font data rotational processing unit 1.

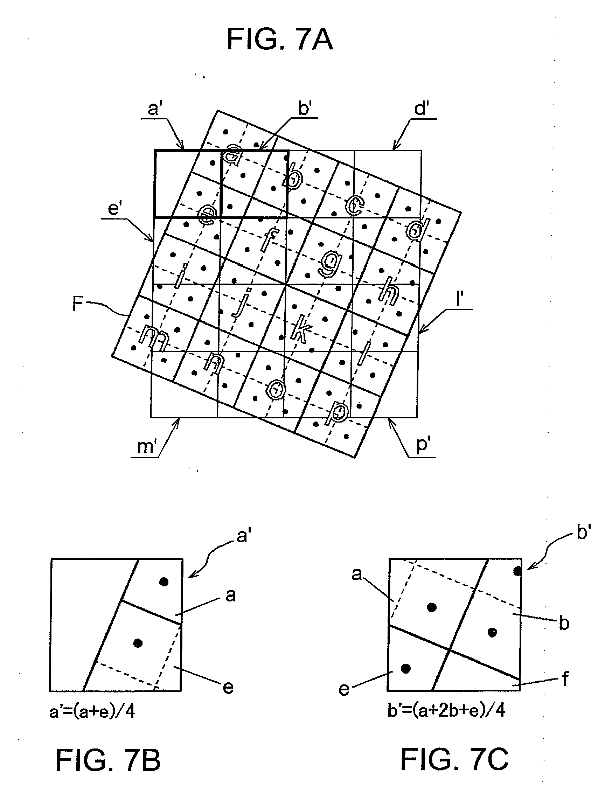

According to the above examples, the conversion table is determined based on the pre-conversion pixels a-p being divided into 16 sub-pixels as shown in FIG. 6. This number of the sub-pixels is merely an example and can be changed appropriately. Thus, for example, as shown in FIG. 7A, the pre-conversion pixels a-p may be divided into four sub-pixels. Then, the value of each of the post-conversion pixels a' to p' may be considered the product of the sub-pixels in each of the post-conversion pixels a' to p' resulting from the rotational processing and the value of each of the pre-conversion pixels a to p. In this case, as shown in FIG. 7B, according to the conversion table for performing the rotational processing by the angle of -22.5° as described above, the value of the post-conversion pixel a' may be expressed, for example, as follows:

$$a' = (a+e)/4 \qquad\qquad (3)$$

Similarly, as shown in FIG. 7C, the value of the post-conversion pixel b' may be expressed as follows:

$$b' = (a+2b+e)/4 \qquad\qquad (4)$$

As a result, a conversion table may be provided in advance with conversion equations determined in a manner similar to Equations 3 and 4, as to all the respective post-conversion pixels a' to p'.

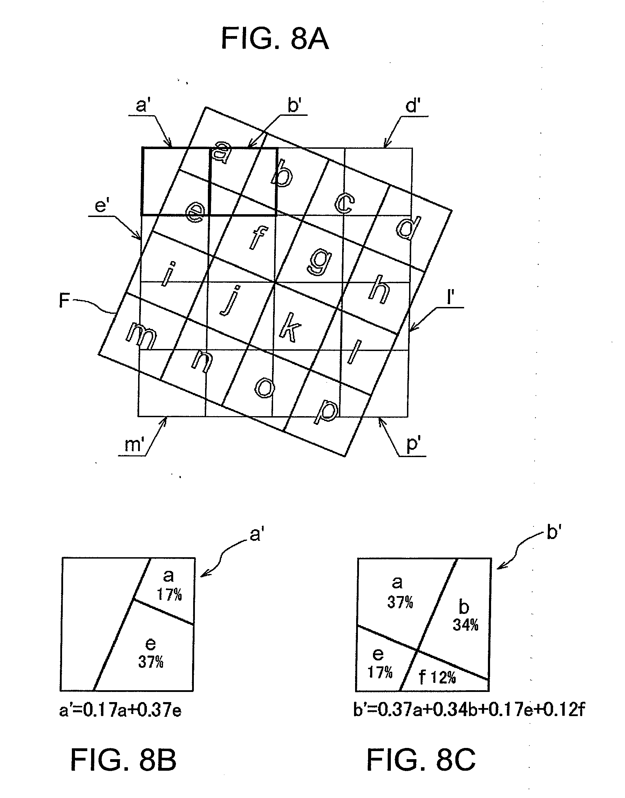

Additionally, for example, a conversion table may prescribe the value of each of the post-conversion pixels a' - p' resulting from the rotational processing of each of the pre-conversion pixels a to p based on a percentage of the pre-conversion pixels in the boundary of each of the post-conversion pixels a' - p'. That is, the post-conversion pixels may be determined without considering sub-pixels. In this case, as shown in FIGS. 8A and 8B, according to the conversion table for performing the rotational processing by the angle of - 22.5°, the value of the post-conversion pixel a' may be expressed, for example, as follows:

$$a' = 0.17a + 0.37e \qquad (5)$$

Similarly, as shown in FIG. 8C, the value of the post-conversion pixel b' may be expressed as follows:

$$b' = 0.37a + 0.34b + 0.17e + 0.12f \qquad (6)$$

As with the previous examples, the resulting conversion table may provided in advance with conversion equations determined in a manner similar to Equations 5 and 6, as to all the respective post-conversion pixels a' to p'.

The above examples have been described within the context of conversion tables corresponding to eight rotational angles, namely, $\pm 22.5°$, $\pm 45°$, $\pm 67.5°$, and $\pm 90°$. However, the rotational processing by the angles of $\pm 90°$ can be performed by permutating the positions of the pixels. Therefore, the number of the conversion tables as described in the foregoing embodiment need not be eight. For example, a rotational processing similar to the rotational processing performed in the case in which the aforementioned eight conversion tables are provided may be performed using only three conversion tables corresponding to +22.5°, +45°, and +67.5°. That is, as described above, the processing of generating the font data of $\pm 90°$ may be performed by permutating the positions of the pixels in the font data of 0° (upright). It is therefore possible to adopt simple conversion tables or simple conversion equations for permutating the positions of those pixels.

The font data of -22.5°, -45°, and -67.5° can be generated by performing a rotational processing by the angle of -90° by means of the aforementioned simple tables or equations, after having been subjected to rotational processing by means of the conversion tables corresponding to +67.5°, +45°, and +22.5° respectively. For instance, in generating the font data of -67.5°, the rotational processing by the angle of -90° is performed by means of the aforementioned simple tables or equations after the font data of 0° have been subjected to the rotational processing by means of the conversion table corresponding to +22.5°.

The above examples have been described within the context of conversion tables corresponding to eight rotational angles ($\pm 22.5°$, $\pm 45°$, $\pm 67.5°$, and $\pm 90°$), which are arranged at intervals of 22.5° within the range of 90° in the clockwise direction and 90° in the counterclockwise direction. However, the rotational angles of the conversion tables prepared in advance in the conversion table memory 17 may be appropriately set in accordance with the mode of using the fonts or the like. Accordingly, if a certain mode of using the fonts or the like is adopted, conversion tables may also be prepared corresponding to angles other than the aforementioned ones or conversion tables corresponding to rotational angles which are arranged at intervals smaller and/or larger than 22.5°.

It is also possible to prepare conversion tables corresponding to rotational angles within an angular range of an angle different from 90° in the clockwise direction and an angle different from 90° in the counterclockwise direction. Furthermore, the prepared conversion tables may not necessarily correspond to rotational angles arranged at equal intervals. Thus, it is possible to prepare conversion tables corresponding to rotational angles arranged at unequal intervals.

According to the above examples, the name designations N of the respective roads R included in the display map M may be generated and superimposed thereon as shown in FIG. 2. However, the range of application of the broad principles described herein need not be limited thereto. That is, names of various display objects on the display map M other than the roads, for example, buildings, rivers, and the like, may be displayed as in the case of the roads R. For example, names of linearly extending display objects such as rivers and the like may be displayed with rotated fonts. It is also preferable to generate and display names of display objects having certain areas such as buildings and the like at appropriate angles in accordance with the arrangement of those display objects on the map.

The above examples have been described within the context of a navigation apparatus 3. However, the range of application of the broad principles described herein need not be limited thereto. That is, the broad principles describe herein may be applied to various apparatuses, programs, and the like requiring the use of fonts corresponding to a plurality of rotational angles. Accordingly, the principles described herein are applicable to electronic maps, mobile phones, mobile information terminals, PDAs (personal digital assistants), electronic papers, and/or programs mounted in one or more apparatuses.

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the broad spirit and scope of the underlying principles. ..

# EP 1 710 713 A1

Systems, methods, and programs for rotating font data may store font data and a plurality of conversion tables, each conversion table corresponding to a preset rotational angle. The systems, methods, and programs may select one of the conversion tables in accordance with a required angle and may rotating the font data based on the selected conversion table. The systems, methods, and programs may further store map data. The systems, methods, and programs may generate name designations of display objects included in the map data in accordance with an arrangement of the display objects on a map and may determine the required angle in accordance with the arrangement of the display objects on the map. The systems, methods, and programs may rotate characters of the generated name designations according to the required angle to create rotated name designations and may display the map data including the rotated name designations.

**Claims**

1. A system (1) for rotating font data, comprising:

   a memory (17,18) that stores:

      font data; and
      a plurality of conversion tables, each conversion table corresponding to a preset rotational angle; and

   a controller (8) that:

      selects one of the conversion tables in accordance with a required angle; and
      rotates the font data based on the selected conversion table.

2. The system (1) claim 1, wherein:

   characters within the font data are composed of bitmap data of a predetermined size, and
   each conversion table prescribes a value of each post-conversion pixel resulting from the rotational processing of the bitmap data based on a value of each pre-conversion pixel.

3. The system (1) of claim 2, wherein each conversion table prescribes the value of each post-conversion pixel as a product of the value of each pre-conversion pixel and an occupancy ratio of the pre-conversion pixel in the post-conversion pixel boundary.

4. The system (1) of claim 3, wherein:

   each pre-conversion pixel is divided into sub-pixels; and
   each conversion table uses an inclusion ratio of the sub-pixels in the post-conversion pixel as the occupancy ratio of the pre-conversion pixel in the post-conversion pixel boundary.

5. The system (1) of claim 3, wherein each conversion table uses a percentage of the pre-conversion pixel that is within the boundary of the post-conversion pixel as the occupancy ratio of the pre-conversion pixel in the post-conversion pixel boundary.

6. The system (1) of claim 1, wherein each of the plurality of conversion tables correspond to a rotational angle preset within a range of 90° in a clockwise direction and 90° in a counterclockwise direction.

7. The system (1) of claim 1, wherein the controller (8) selects, out of the plurality of the conversion tables, one of the conversion tables which corresponds to a rotational angle closest to the required angle.

8. A map display system (2), comprising the system of claim 1, wherein:

   the memory (10) stores map data; and
   the controller (8):

      acquires map data from the memory (10);
      generates name designations of display objects included in the map data in accordance with an arrangement of the display objects on a map;

determines the required angle in accordance with the arrangement of the display objects on the map;

rotates characters of the generated name designations according to the required angle to create rotated name designations; and

displays the map data including the rotated name designations.

9. The map display system (2) of claim 8, wherein:

the display objects are roads; and

the controller (8):

determines the required angle in accordance with directions of respective sections of the roads on the map, and

arranges the rotated name designation of each road along the shapes of the road on the map.

10. A method for rotating font data, comprising:

storing font data;

storing a plurality of conversion tables, each conversion table corresponding to a preset rotational angle;

selecting one of the conversion tables in accordance with a required angle; and

rotating the font data based on the selected conversion table.

**FIG. 1**

## FIG. 2

## FIG. 3

FIG. 4

FIG. 5A          FIG. 5B          FIG. 5C

# FIG. 6A

a'=(3a+6e)/16

## FIG. 6B

b'=(6a+5b+3e+2f)/16

## FIG. 6C

# FIG. 7A

# FIG. 7B

$$a'=(a+e)/4$$

# FIG. 7C

$$b'=(a+2b+e)/4$$

# FIG. 8A

a'=0.17a+0.37e

# FIG. 8B

b'=0.37a+0.34b+0.17e+0.12f

# FIG. 8C

**European Patent Office**

## EUROPEAN SEARCH REPORT

Application Number

EP 06 11 2318

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KAMBIC S F: "ROTATED MATRIX CHARACTERS/GRAPHICS SYSTEM" April 1980 (1980-04), IBM TECHNICAL DISCLOSURE BULLETIN, IBM CORP. NEW YORK, US, PAGE(S) 4988-4990 , XP000713498 ISSN: 0018-8689 * the whole document * | 1,2,6-10 | INV. G06F17/21 G01C21/36 |
| A | US 5 280 577 A (TREVETT ET AL) 18 January 1994 (1994-01-18) * column 3, line 24 - line 38 * * column 7, line 48 - line 55; figure 6 * | 1,10 | |
| D,A | WO 86/02764 A (ETAK, INC) 9 May 1986 (1986-05-09) * abstract; figure 5 * * page 22, line 29 - page 23, line 4; figure 4 * | 1,10 | |

TECHNICAL FIELDS SEARCHED (IPC)

G06F
G01C

The present search report has been drawn up for all claims

| Place of search | Date of completion of the search | Examiner |
|---|---|---|
| Munich | 7 July 2006 | Jakob, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 710 713 A1

## ANNEX TO THE EUROPEAN SEARCH REPORT
## ON EUROPEAN PATENT APPLICATION NO.

EP 06 11 2318

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2006

| Patent document cited in search report | | Publication date | Patent family member(s) | | Publication date |
|---|---|---|---|---|---|
| US 5280577 | A | 18-01-1994 | NONE | | |
| WO 8602764 | A | 09-05-1986 | AT | 146890 T | 15-01-1997 |
| | | | AU | 5064485 A | 15-05-1986 |
| | | | CA | 1248630 A1 | 10-01-1989 |
| | | | DE | 3588138 D1 | 06-02-1997 |
| | | | DE | 3588138 T2 | 17-04-1997 |
| | | | EP | 0199780 A1 | 05-11-1986 |
| | | | ES | 8900262 A1 | 16-10-1989 |
| | | | IE | 76913 B1 | 05-11-1997 |
| | | | JP | 3260722 B2 | 25-02-2002 |
| | | | JP | 11325924 A | 26-11-1999 |
| | | | JP | 3053377 B2 | 19-06-2000 |
| | | | JP | 10143067 A | 29-05-1998 |
| | | | JP | 10149094 A | 02-06-1998 |
| | | | JP | 10143068 A | 29-05-1998 |
| | | | JP | 2883322 B2 | 19-04-1999 |
| | | | JP | 10260629 A | 29-09-1998 |
| | | | JP | 2813977 B2 | 22-10-1998 |
| | | | JP | 10143069 A | 29-05-1998 |
| | | | JP | 10149095 A | 02-06-1998 |
| | | | JP | 10149096 A | 02-06-1998 |
| | | | JP | 6025909 B | 06-04-1994 |
| | | | JP | 62501650 T | 02-07-1987 |
| | | | MX | 171145 B | 04-10-1993 |
| | | | PT | 81349 A | 01-11-1985 |
| | | | ZA | 8508112 A | 24-06-1987 |

For more details about this annex : see Official Journal of the European Patent Office, No. 12/82

17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005111272 A
- JP 62501650 A